# EUROPÄISCHE PATENTANMELDUNG

(11) **EP 1 519 262 A1**
(43) Veröffentlichungstag der Anmeldung: **30.03.2005**
(21) Anmeldenummer: 04018590.2
(22) Anmeldetag: 18.12.2002
(51) Int. Cl.: G06F 3/12

(54) **Verfahren, Gerätesystem und Computerprogramm zum Speichern und Abrufen von Druckdaten in einem Netzwerk**

(30) Priorität: 18.12.2001 DE 10162251; 31.01.2002 DE 10203869
(62) Teilanmeldung aus: 02795229.0
(71) Anmelder: Océ Printing Systems GmbH, 85586 Poing (DE)
(72) Erfinder: Benz, Victor, 85614 Kirchseeon (DE); Petz, Steffen, 85586 Poing (DE)
(74) Vertreter: Schaumburg, Thoenes, Thurn, Landskron

(57) **Zusammenfassung**

Gezeigt wird ein Verfahren, ein Computersystem und Computerprogramme zum Speichern und Abrufen von Druckdaten, bei dem Druckdaten eines Druckauftrages von einer Datenquelle (6a, 6b, 6c, 9) blockweise an mindestens einen von mehreren über ein Netzwerk (8) miteinander verbundenen Druckserver (2, 3, 4, 5) übertragen und dort abgespeichert werden. Dabei werden Steuerungsdaten zu den jeweiligen, an den Druckserver (2, 3, 4, 5) übertragenen Druckdaten erfasst und in dem Netzwerk (8) gespeichert. Von einem zentralen Steuerungsmodul des Netzwerks (8) wird die Weiterverarbeitung des Druckauftrages derart an einen Druckserver (2, 3, 4, 5) zugewiesen, dass der Druckserver (2, 3, 4, 5) die Steuerungsdaten erhält. Der Druckserver (2, 3, 4, 5) liest anhand der Steuerungsdaten die Druckdaten blockweise von dem jeweiligen Druckserver (2, 3, 4, 5), verarbeitet und/oder zwischenspeichert sie bei Bedarf und leitet sie dann an ein weiterverarbeitendes Gerät (10, 11, 12, 13, 16) weiter.

## Beschreibung

Die Erfindung betrifft ein Verfahren, ein Gerätesystem und ein Computerprogramm, mit denen Druckdaten zwischen mehreren Geräten übertragen, gespeichert und abgerufen werden.

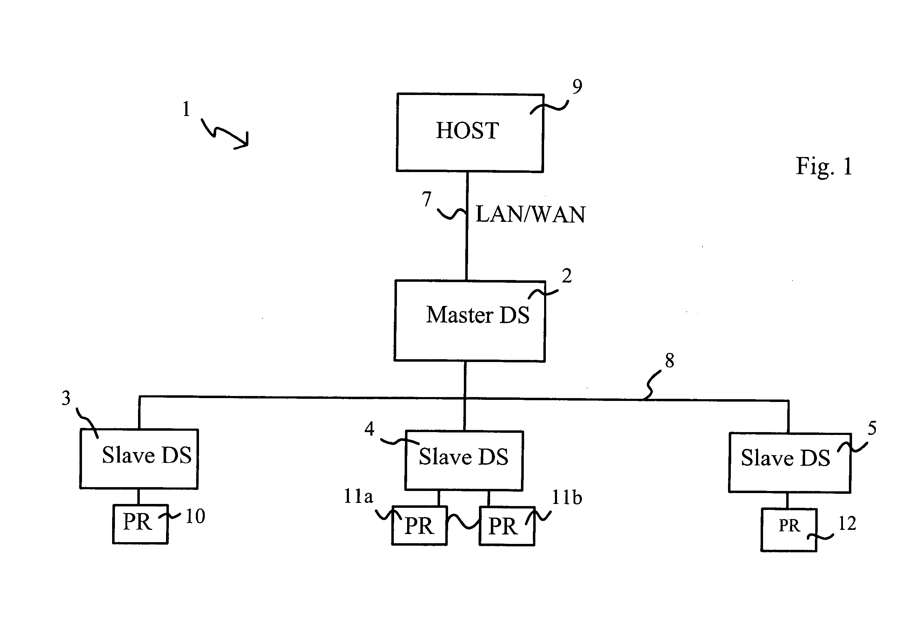

Die Erfindung betrifft insbesondere Hochleistungs-Drucksysteme, bei denen Druckdaten und Ressourcen zu sogenannten Druckaufträgen (Print Jobs) zusammengefaßt werden und von einer Datenquelle in ein Druckproduktionssystem übertragen werden. Derartige Systeme, die Computer, Steuerungseinheiten und Druckgeräte umfassen, sind beispielsweise in der Veröffentlichung "Das Druckerbuch", Dr. Gerd Goldmann (Herausgeber), Océ Printing Systems GmbH, 6. Ausgabe (Mai 2001), ISBN 3-00-001019-x beschrieben. In Kapitel 14 ist das Serversystem Océ PRISMApro beschrieben. Dieses flexible Druckdaten-Serversystem ist beispielsweise dazu geeignet, Druckdaten von Datenquellen wie einem Quell-Computer, der Druckdaten in einer bestimmten Druckdatensprache wie AFP (Advanced Function Presentation), PCL (Printer Command Language), PostScript, SPDS (Siemens Print Data Stream) oder die von der Firma Xerox Coperation entwickelte Sprache LCDS an ein Druckproduktionssystem zu übertragen. Figur 1 zeigt ein solches Druckproduktionssystem 1, bei dem Druckdaten von einem Host-Computer 9 über ein erstes Netzwerk 7 zu einem Master-Druckserver 2 übertragen werden, der die Druckdaten auftragsweise jeweils an einem der Slave-Druckserver 3, 4, 5 vollständig überträgt. Vom Slave-Druckserver werden die Daten dann an ein erstes Druckgerät 10 zum Drucken übertragen. Die auf dem zweiten Slave-Druckserver 4 gespeicherten Druckaufträge werden an das Drucksystem, welches aus zwei Druckern 11a, 11b besteht, übertragen und die im Druckserver 5 gespeicherten Druckaufträge werden zum Drucken an das Druckgerät 12 übertragen. An einem derartigen Druckserver 2, 3, 4 oder 5 können also bis zu zwei Drucker (Twin-System) angeschlossen werden. Zur Steigerung der Druckleistung werden auch mehrere Drucker im parallelen Betrieb eingesetzt. Dies erfordert einen deutlich höheren Verwaltungs- und Steuerungsaufwand und wird bisher mittels zwei Konzepten verwirklicht:

Gemäß einem ersten, sogenannten Shared-Spool-Konzept läuft ein Druckertreiber auf einem eigenen Rechner ab, wobei aber alle Druckertreiber über ein dafür dediziertes Netzwerksegment auf einen gemeinsamen Speicherbereich (Shared Spool) zugreifen. Da alle Druckertreiber auf diesen gemeinsamen Speicherbereich zugreifen, können alle Jobs aus dem Spool-Bereich auf allen Druckern ausgedruckt werden bzw. beliebig zwischen den Druckern hin- und her geschaltet werden ohne die Druckdaten zu bewegen. Allerdings bestehen bei diesem Konzept Beschränkungen im möglichen Gesamt-Datendurchsatz, da die Daten aus dem Spool-Bereich jeweils über das gemeinsame Netzwerk zu dem jeweiligen Druckgerät übertragen werden müssen und beim parallelen Zugreifen auf den Spool-Bereich aufgrund der beschränkten Bandbreite Verzögerungen auftreten können.

Ein zweites Konzept zur Steigerung der Druckleistung sieht vor, Druckaufträge an einen zentralen Computer zu senden, der die Aufträge analysiert und mit Hilfe eines sogenannten Workflow Managers an unterschiedliche Server verteilt, die je nach Ausprägung Daten für den Druck aufbereiten (z. B. die Daten rastern) oder die Daten direkt einem Drucker zuführen und somit den Druck dieser Daten mit hoher Leistung sicherstellen. Dieses Konzept bewährt sich bei der Bearbeitung von kleinen bis mittleren Jobs heterogener Datenströme mit unterschiedlichen Dateitypen. Es ist aber zur Verarbeitung großen, homogenen Druck-Aufträgen, die beispielsweise 1000-fach dieselben Formulare mit jeweils unterschiedlichen Formulardaten enthalten, weniger geeignet. Ein Problem bei derartigen großen Jobs besteht darin, daß der Druckvorgang erst gestartet wird, wenn die Übertragung abgeschlossen ist. Dies führt dazu, daß eine vollständig neue Übertragung von einem ersten Druckserver an einen zweiten Druckserver nötig ist, wenn das Ausdrucken am ersten Druckserver gestört ist, z. B. bei Ausfall des angeschlossenen Druckgeräts. Durch die Übernahme der dauten vom ersten an den zweiten Druckserver entstehen lange Wartezeiten, die die Effizienz eines Druckproduktionssystem in unakzeptablem Maße vermindern können.

Beide oben genannten Konzepte sind in der eingangs zitierten Veröffentlichung "Das Druckerbuch" im Kapitel 14 unter Nr. 3 "Skalierbare Druckleistung der Océ PRISMApro Server" beschrieben.

In der JP-A-11175292, in der DE-A1-10107377 und in der DE-C2-4013286 sind Verfahren und Systeme zum Speichern und Abrufen von Druckdaten beschrieben, bei denen mehrere Speichermedien vorgesehen sind.

Ein weiterer Aspekt der Erfindung betrifft ein Gerätesystem, das mit einem JAVA-basierten Schnittstellen-Programmmodul gesteuert wird. Weiterhin betrifft dieser Aspekt ein JAVA-System, das zum Verwalten und Bearbeiten von Dateien geeignet ist, die in einem Netzwerk auf einem beliebigen Speichermedium wie z.B. auf einem Computer, einem Plattenlaufwerk, einem Bandspeicher, einer CD-ROM oder einem anderen Speichermedium gespeichert sind.

JAVA ist eine plattformunabhängige, objektorientierte Programmiersprache, mit der sichergestellt werden kann, dass Programme, die in JAVA geschrieben sind, auf beliebigen Computern bzw. Betriebssystemen ausgeführt werden können, sofern jeweils ein entsprechendes JAVA-System eingerichtet ist. Die grundlegenden Strukturen von JAVA, mit welchen die Plattformunabhängigkeit geschaffen wird, sind in dem amerikanischen Patent US-A-5,668,999 beschrieben.

Das Lesen, Schreiben, Löschen, Umbenennen und Kopieren sowie das Besorgen von bestimmten Informationen aus Dateien ist in JAVA nur für lokale Dateien implementiert, d.h. für Dateien, die auf demselben Computer physikalisch gespeichert sind, auf dem das JAVA-System installiert ist.

Dateien, deren Speicherort in einem Netzwerk beliebig sein kann, also lokale und nicht lokale Dateien, deren Verwaltung in einer computerübergreifenden Ebene erfolgt, werden nachfolgend logische Dateien genannt. Logische Dateien sind also Dateien in einem Computernetzwerk, auf die über bekannte JAVA-Strukturen insbesondere zur Ausführung von Verwaltungsoperationen systembedingt nicht zugegriffen werden kann. Dazu zählen zum Beispiel Remote-Dateien, d.h. Dateien, die auf einem anderen Computer oder in einem Geräte-Archiv gespeichert sind. Solche Dateien können aber beispielsweise an Ihrem Namen und Ihrem Speicherort, d.h. dem Pfadnamen in einem Netzwerk, identifiziert werden. Dabei ist es zu wünschen, dass auf solche Dateien nicht nur lesend zugegriffen werden kann, sondern sie auch verwaltet werden können, indem z.B. Dateiattribute verändert oder der Speicherort (Pfad) geändert werden.

Eine Grundlage der JAVA-Programmierung ist das sogenannte Ableiten von Klassen. Verkürzt ausgedrückt, versteht man darunter das Erzeugen einer neuen Klasse aus einer alten Klasse, wobei die Funktionen und Methoden der alten Klasse in die neue Klasse übernommen werden und in dieser neuen Klasse mindestens eine Funktion, die in der alten Klasse nicht implementiert war, zusätzlich implementiert wird.

In anderen objektorientierten Programmiersprachen wie z.B. C⁺⁺ sowie in der objektorientierten Beschreibungssprache UML (Unified Modeling Language) wird statt des Begriffs "Ableiten" auch der Begriff der "Vererbung" verwendet. Die UML ist in "UML-Unified Modeling Language, Objektorientierte Programmierung in der Praxis", R. Burkhardt, Addison-Wesley, Massachusetts (1999), ISBN 3-8273-1407-0 beschrieben.

Aus dem allgemein bekannten Betriebssystem Microsoft Windows® NT ist ein Programm-Modul zum Verwalten von Programmen bekannt. Des weiteren ist in diesem Betriebssystem das Dienstprogramm "Active Directory" enthalten, mit dem Objekte aller Art in einem Computernetzwerk verwaltet werden können. Details über dieses Active Directory Programm-Modul sind z.B. in den Veröffentlichungen "Inside Windows NT®", David A. Solomon, Microsoft Press, Redmond, Washington, USA (1998), ISBN 1-57231-677-2 auf Seiten 452 bis 455 und in "Microsoft Windows® 2000 Server Deployment Planning Guide", Microsoft Press, Redmond, Washington, USA (2000), ISBN 1-57231-805-8 auf Seiten 255-271, 289-294 und 354-359 beschrieben. Weiterhin wurde im Microsoft Developer Network (MSDN) Library unter der Internet-Adresse: msdn.microsoft.com verschiedene Informationen zum Active Directory veröffentlicht, z.B. "Microsoft Windows 2000 Active Directory Technical Summary", "Active Directory Services Interface in the Microsoft Exchange 5.5. Environment", Microsoft Corporation (1997) und "NT Directory Services". Über dieselbe Adresse sind auch Informationen über das sogenannte Microsoft .NET Framework zu beziehen, durch das die Programmierbarkeit und Verfügbarkeit von Computerprogrammen in einem heterogenen Netzwerk verbessert werden kann.

Die Erfindung betrifft insbesondere auch ein Verfahren und ein System zur Verarbeitung eines Druckdatenstroms, der zur Ausgabe auf einem Druckgerät aufbereitet wird. Eine derartige Aufbereitung findet typischerweise in Computern statt, die Druckdateien oder Druckdaten aus Anwenderprogrammen heraus druckerangepaßt verarbeiten. Die Druckdaten werden dabei z.B. in einem Ausgabestrom einer bestimmten Druckdatensprache wie AFP® (Advanced Function Presentation), PCL oder PostScript umgewandelt. Die Druckdatensprache AFP ist beispielsweise in der Publikation Nr. S-544-3884-02 der Firma International Business Machines Corp. (IBM) mit dem Titel "AFP Programming Guide and Line Data Reference" beschrieben. Bei der Erstellung von Druckaufträgen mit dem Druckdatenformat AFP ist es häufig vorgesehen, vorgegebene Daten, sogenannte Ressource-Daten erst kurz vor dem Drucken mit variablen Daten zu verbinden um ein Dokument zu erzeugen. Die Ressource-Daten können dabei an verschiedenen Standorten bzw. Computern abgespeichert sein, die u.U. unter verschiedenen Betriebssystemen bzw. Plattformen angesteuert werden.

In Großrechenzentren werden die Druckdaten typischerweise in einem Host Computer (Main Frame) zusammengetragen (Spooling-Vorgang) und daraus Druckaufträge (Jobs) generiert, die derart zur Ausgabe auf Hochleistungsdrucksystemen angepaßt sind, daß die Hochleistungsdrucksysteme im Produktionsbetrieb zeitlich optimal ausgelastet werden können. Sie können dabei weitgehend im kontinuierlichen Betrieb eingesetzt werden. Immer häufiger werden die Druckdaten dabei dezentral bearbeitet, die Daten an verschieden Standorten bzw. in verschiedenen Systemen gespeichert und erst zum Ausdrucken wieder zusammengeführt.

Derartige Hochleistungsdruckgeräte mit Druckgeschwindigkeiten von etwa 40 DIN A 4 Seiten pro Minute bis zu über 1000 DIN A 4 Seiten pro Minute und die dazugehörigen Arbeitsverfahren sind beispielsweise in der Veröffentlichung "Das Druckerbuch", herausgegeben von Dr. Gerd Goldmann (Océ Printing Systems GmbH), Ausgabe 4C, Oktober 1999, ISBN 3-000-00 1019-X beschrieben. Im Kapitel 12 (Seiten 12-1 bis 12-18) dieser Publikation ist das unter dem Namen PRISMA PRO® bekannte Server-System beschrieben, welches in Produktions-Druck-Umgebungen der Aufbereitung von Druckdatenströmen dient.

In der Quelle Forte™ for Java™ Community Edition, Module Creation and Integration [online], Sun Microsystems, 31.08.2001, http://www.sun.com/forte/ffj/resources/articles/handbook.pdf, ist im Kapitel 4 ein File System beschrieben, das zur Verwaltung von Dateien mit Computerprogrammen geeignet ist, die in Java programmiert sind.

Es ist Aufgabe der Erfindung, die Datenübertragung von einer Druckdatenquelle zu einem Netzwerk von Druckdatenservern auftragsweise zeit- und systemoptimiert durchführen zu können.

Diese Aufgabe wird durch die in den unabhängigen Ansprüchen angegebene Erfindung gelöst. Vorteilhafte Ausführungsformen der Erfindung sind in den Unteransprüchen angegeben.

Erfindungsgemäß werden Druckdaten eines Druckauftrages von einer Datenquelle blockweise an mindestens einen von mehreren über ein Netzwerk miteinander verbundene Druckserver übertragen und dort abgespeichert. Dabei werden Steuerungsdaten zu den jeweiligen, an die Druckserver übertragenen Druckdaten, erfasst und in dem Netzwerk gespeichert. Von einem zentralen Steuerungsmodul des Netzwerks wird die Weiterverarbeitung des Druckauftrages derart an einen Druckserver zugewiesen, dass der Druckserver die Steuerungsdaten erhält und dieser anhand der Steuerungsdaten die Druckdaten blockweise von dem jeweils zugeordneten, insbesondere von einem der anderen Druckserver liest, die Druckdaten bei Bedarf zwischenverarbeitet und/oder zwischenspeichert und sie dann an ein weiterverarbeitendes Gerät weiterleitet.

Die Erfindung beruht auf der Überlegung, dass durch ein flexibles Verteilen von Druckaufträgen auf verschiedene Druckserver eines Computer-Netzwerks in einem Druckproduktionssystem die Abarbeitung der Aufträge insgesamt beschleunigt wird. Durch die flexible Verteilung der Daten eines Druckauftrages auf mehrere Druckserver und das Zuweisen der Abarbeitung des Druckauftrages an einen dieser Druckserver - vorzugsweise an denjenigen, der die meisten Druckdaten des Auftrages gespeichert hat - kann das Computernetzwerk und das Druckproduktionssystem, welches zudem die weiterverarbeitenden Geräte wie Rasterprozessoren und/oder Druckgeräte umfasst, effizienter genutzt werden als bisher.

Beispielsweise kann dadurch beim Eintreffen eines mehrere Megabyte großen Druckauftrages, dessen Datenübertragung von einem Eingangsgerät an einen ersten Druckserver des Druckserver-Netzwerks mehrere Stunden dauert, bereits aus dem ersten Druckserver und/oder in einem zweiten Druckerserver das Drucken begonnen werden, während der erste Druckserver noch Daten empfängt. Weiterhin kann dadurch ein kleinerer Druckauftrag, der nach dem großen Druckauftrag an dem Druckserversystem eintrifft und dessen Bearbeitung ebenfalls durch den ersten Druckserver vorgesehen ist, ohne weiteres zur Bearbeitung bzw. zum Ausdruck auf einen anderen, weniger ausgelasteten Druckserver des Netzwerks umgeleitet werden, so dass der große Druckauftrag unterbrechungsfrei abläuft und der kleine Druckauftrag zügig abgearbeitet wird. In einem vorteilhaften Ausführungsbeispiel der Erfindung erfolgt die Zuweisung an einen Druckserver bzw. an das bzw. die daran angeschlossenen Weiterverarbeitungsgeräte bereits von vorne herein (während des Einspielen der Daten in das Druckserver-Netzwerk) nach dem Kriterium, welches Druckserver/Weiterverarbeitungssystem zum Zeitpunkt des Einspielens am wenigsten ausgelastet ist. Diese Zuweisung kann sich allerdings im Laufe des Druckproduktionsfortschritts als ungünstig erweisen, wenn z.B. in dem angeschlossenen Gerät zur Weiterverarbeitung (z.B. im Druckgerät und/oder Rasterprozessor) eine Störung auftritt. In diesem Falle ist es besonders günstig, einen Druckauftrag ganz und insbesondere auch teilweise zur Bearbeitung und insbesondere zur Weiterbearbeitung an einen anderen Druckserver zu leiten. Dabei werden vom zentralen Steuerungsmodul die zur Weiterbearbeitung des Druckauftrages benötigten Steuerungsdaten an den anderen Druckserver übertragen. Insbesondere bei der teilweisen Übertragung/Weiterbearbeitung, kommt der erfindungsgemäße Vorteil zum Tragen, dass nicht die kompletten Druckdaten an den weiterverarbeitenden Druckserver übertragen werden müssen, sondern nur die noch nicht bearbeiteten Daten bzw. die noch nicht auf ihm gespeicherten Daten.

Gemäß einem bevorzugten Ausführungsbeispiel der Erfindung werden die Druckdaten eines Druckauftrages von der Datenquelle blockweise an die verschiedenen, über ein Netzwerk miteinander verbundene Druckserver übertragen und dort abgespeichert. Diese Datenübertragung wird derart überwacht bzw. gesteuert, daß Steuerungsdaten zu den jeweiligen, an die Druckserver übertragenen Druckdaten erfaßt werden, so daß mittels der Steuerungsdaten das blockweise Abrufen der Druckdaten zu einem die Druckdaten weiterverarbeitenden Gerät steuerbar ist. Die Datenübertragung wird insbesondere mit einem Master-Computerprogramm überwacht bzw. gesteuert, das auf einem an dem Netzwerk angeschlossenen Master-Druckserver abläuft. Das Zuweisen der Druckdaten zu den im Netzwerk verbundenen Druckservern, die den Master-Druckserver sowie weitere, mit den Master-Druckserver nach dem Master-Slave-Prinzip verbundene Slave-Druckserver umfaßt, durch das Master-Computerprogramm gesteuert werden. Die Steuerung kann dabei insbesondere derart erfolgen, daß jeweils ein Datenblock an denjenigen Druck-Server des Netzwerks zugewiesen wird, der aktuell die geringste Auslastung hat. Die Auslastung kann laufend überwacht werden und jeweils bestimmte Intervalle, beispielsweise über einige Sekunden bis zu einigen Minuten erfaßt werden.

Bei der blockweisen Übertragung bzw. beim blockweisen Abrufen der Druckdaten werden jeweils Datenblöcke in der Reihenfolge ihres Eingangs von der Datenquelle bzw. in der Reihenfolge abgelegt, die den zugrunde liegenden Dokumenten des Druckauftrages entspricht. Bei Datenströmen im AFP-Druckdatenformat sind dies insbesondere die dem Druckauftrag entsprechenden Ressourcen-Daten sowie die variablen Daten des Druckauftrages. Somit sind die verschiedenen Ressourcen auf verschiedene Druckdaten-Server des Netzwerks aufteilbar, sowie die verschiedenen variablen Daten ebenfalls auf die verschiedenen Druckserver aufteilbar. Die Zuordnung und Reihenfolge dieser Daten innerhalb des Dokuments sowie die Speicherorte innerhalb des Druckdatenserver-Netzwerks werden als auftragsspezifische Steuerungsdaten, insbesondere im Master-Druckdatenserver gespeichert und einer späteren Weiterverarbeitung der Daten, beispielsweise beim Ausdrucken der Daten auf einem Druckgerät, dazu verwendet, um die ursprüngliche Reihenfolge der Dokumente des Druckauftrages sowie die Speicherorte der Blöcke (Ressourcen und variablen Daten) zu erkennen und somit den Druckauftrag vollständig und in der richtigen Reihenfolge zum Ausdruck zu bringen.

Gemäß einem weiteren, vorteilhaften Ausführungsbeispiel der Erfindung werden schon während des Eingangs von Daten eines Druckauftrages im Druckserver-Netzwerk Daten des selben Druckauftrages, die bereits früher im Druckserver-Netzwerk eingegangen sind und auf einem oder den verschiedenen Druckdatenservern abgespeichert wurden, abgerufen und weiter verarbeitet. Somit sind ein kontinuierlicher Arbeitsablauf und sogenannte on-the-fly-Betriebsweisen ermöglicht, durch die die Datenhaltung innerhalb des Druckdatenserver-Netzwerks auf ein Minimum reduziert ist. Die on-the-fly-Betriebsarten sind somit besonders für große Druckaufträge günstig, die z.B. einige zig Gigabyte Daten enthalten und deren Übertragungsdauer in das Netzwerk in der Größenordnung von Stunden liegt. Ein weiterer Vorteil dieser Betriebsweisen ist, daß Daten eines Druckauftrages leicht von einem ersten Druckdatenserver von einem zweiten Druckdatenserver übernommen werden können, was insbesondere im Falle eines Ausfalls des am ersten Druckdatenserver angeschlossenen Druckers oder bei einer Störung des ersten Druckdatenservers erfolgen kann.

In einem weiteren, bevorzugten Ausführungsbeispiel der Erfindung wird von einem zentralen Steuerungsmodul, das insbesondere ein im Master-Computer ablaufendes Computerprogramm sein kann, entschieden, auf welchen Druckservern die Bearbeitung und/oder Zwischenspeicherung der im Druckserver eingegangenen Druckdaten gespeichert werden.

Zur Weiterverarbeitung der Druckdaten können insbesondere ein oder mehrere Druckgeräte, ein Drucksystem bestehend aus mehreren datentechnisch und/oder mechanisch direkt miteinander verbundenen Druckern vorgesehen sein und/oder auch ein Raster-Prozessor, der aus kodierten Druckdaten aufgerasterte Punktdaten erzeugt.

Ein weiterer Aspekt der Erfindung, der auch unabhängig von den oben geschilderten Merkmalen und Aspekten der Erfindung gesehen werden kann, betrifft die Aktualisierung (Update) von Ressourcen-Daten in einem Druckserver-Netzwerk. Dabei ist vorgesehen, daß in mehreren Druckservern und in einem Master-Druckserver, der mit den üblichen Druckservern des Netzwerks nach dem Master-Slave-Prinzip verbunden ist, ein Ressourcen-Update zunächst nur im Master-Druckserver durchgeführt wird. Wenn Slave-Druckserver einen Druckauftrag zu bearbeiten haben und dabei Ressourcen-Daten benötigen, dann führen Sie zu den jeweiligen Ressourcen-Daten jeweils eine Versionsabfrage am Master-Druckserver derart durch, daß im Master-Druckserver anhand eines Versionskennzeichens überprüft wird, ob die in ihm gespeicherten Ressourcen-Daten gleich sind zu denen, die sich im anfragenden Slave-Druckserver befinden. Bei Feststellen einer Diskrepanz zwischen den Versionen wird entweder vom Master-Druckserver die neuere (jüngere) Version an den Slave-Druckserver übertragen und dort zur Bearbeitung des Druckauftrags verwendet oder, wenn eine bestimmte ältere Version einem Druckauftrag fest zugeordnet ist, die ältere Version verwendet.

Gemäß einem weiteren Aspekt der Erfindung, der ebenfalls unabhängig von den zuvor genannten Aspekten gesehen werden kann, ist ein systemunabhängiges Schnittstellen-Programmmodul vorgesehen, das Funktionen und Methoden zur Handhabung und Verwaltung von Dateien abstrakt beschreibt. Weiterhin ist eine abstrakte Dateisystem-Klasse vorgesehen, die zumindest einen Teil der Funktionen und Methoden des systemunabhängigen Schnittstellen-Programmmoduls implementiert, welche wiederum von den von der abstrakten Dateisystem-Klasse abgeleiteten Implementierungen verwendet werden können.

Durch den zuletzt genannten Aspekt wird ein plattformunabhängiges, system-einheitliches Verfahren bzw. Steuerungssystem angegeben, mit denen die Verwaltung und Handhabung sowohl von lokalen als auch von logischen Dateien auf einfache Art und Weise möglich ist. Er beruht auf der Überlegung, dass es durch eine objektorientiert programmierte, systemunabhängige Datei-System-Schnittstelle, die eine Fülle von abstrakten Methoden und Funktionen zur Verwaltung und Bearbeitung von Dateien definiert, möglich ist, diese Schnittstelle sehr universell einzusetzen und sich daher universelle Anwendungsmöglichkeiten im Bereich der Dateiverwaltung und- bearbeitung ergeben.

Die vordefinierte Schnittstelle und ihre entsprechenden Klassen sind aufgrund ihrer maßgeschneiderten Methoden und Funktionen direkt zur Verwaltung und Bearbeitung von Dateisystem-Objekten verwendbar, ohne dass zusätzliche Treiber-Programme erstellt werden müssen.

Weiterhin beruht der zuletzt genannte Aspekt auf der Überlegung, dass es in einem abgeleiteten System von Klassen eines objektorientiert programmierten Computerprogramms vorteilhaft ist, in einer übergeordneten Klasse nur diejenigen Funktionen zu implementieren, die von mehreren oder sogar allen von ihr abgeleiteten Klassen benötigt werden. Beispielsweise enthält die abstrakte Dateisystem-Klasse Grundfunktionen, die von allen davon abgeleiteten Klassen gebraucht werden, wie z.B. das blockweise Kopieren von Daten oder das rekursive Kopieren und Löschen von Verzeichnissen, d.h. das Durchführen dieser Operationen im Verzeichnis und allen dazu gehörenden Unterverzeichnissen.

Die universelle Datei-System-Schnittstelle ermöglicht es ebenfalls, ein verkettetes bzw. hierarchisches Zusammenspiel von Klassen von Datei-Systemen zu ermöglichen, weil die universelle Schnittstelle alle von den Klassen implementierten Methoden als abstrakte Methoden beschreibt. Somit ist die Verwaltung des gesamten Dateisystems in einem Computernetzwerk sehr einfach möglich, auch wenn die Computer mit unterschiedlichen Betriebssystemen, d.h. in einem heterogenen Netzwerk, betrieben werden.

Durch die hierarchische bzw. verkettete Gliederung des Systems an Klassen ist ein Netzwerk sehr leicht erweiterbar, beispielsweise, wenn neue Geräte mit zu verwaltenden Dateien hinzukommen.

Das Dateisystem ist insbesondere in der Programmiersprache JAVA und somit betriebssystemunabhängig definiert und das systemunabhängige Schnittstellen-Programmmodul ist insbesondere eine JAVA-Schnittstelle (JAVA file system interface). Dieser Aspekt der Erfindung ist daher insbesondere für JAVA File Systeme zur Datei/Verzeichnisverwaltung und -bearbeitung in einer offenen Netzwerkstruktur geeignet, die Computer mit verschiedenen Betriebssystemen enthält.

Die abstrakte Dateisystem-Klasse ist insbesondere eine Teilimplementierung der abstrakten Dateisystem-Schnittstelle und kann im Sinne einer objektorientierten Programmiersprache insbesondere Basis für weitere Ableitungen der Klasse sein. Die Erfindung ermöglicht es somit, an logischen Dateisystemen Verwaltungsoperationen einschließlich des Lesens und des Schreibens von Dateien durchzuführen, indem im Computernetzwerk mittels einer einheitlichen Schnittstelle eine hierarchische und/oder verkettete Zuweisung von abstrakten Dateisystemen erfolgt. Dabei werden zumindest in der bezüglich einem Bediener obersten bzw. ersten Schnittstelle eine grafische Bedienoberfläche zur Datei-Anzeige und/oder zur Eingabe gewünschter Dateioperationen vorgesehen. In der untersten bzw. letzten Schnittstelle erfolgt demgegenüber ein Zugriff auf das dem abstrakten Dateisystem zugeordnete physikalische Dateisystem.

Ein Benutzer eines erfindungsgemäßen Datei-Systems (file systems) wird insbesondere nur mit den Funktionen und Methoden der Dateisystem-Schnittstelle konfrontiert, aber nicht mit der Struktur der miteinander verketteten Schnittstellen. Mittels der verketteten Schnittstellen und der abstrakten Datei-System-Klasse (abstract file system class) werden die an einem physikalischen Datei-System durchgeführten Operationen im obersten bzw. ersten Interface dem Bediener zugänglich gemacht. Dabei können die physikalischen Datei-Systeme auf unterschiedlichste Art ausgebildet sein, z.B. als Remote-Dateien, als Plattenlaufwerke, als CACHE-Speicher, als Archivspeicher wie z.B. CD-ROMS oder Magnetbänder usw..

Vorzugsweise werden von der abstrakten Dateisystem-Klasse (Abstract File System Class) weitere Klassen von Dateisystemen (File Systems) abgeleitet, die die Funktionalität des abstrakten Dateisystems ergänzen und die ebenfalls mit der Dateisystem-Schnittstelle (File System Interface) kommunizieren können. Derartige, von der abstrakten Klasse abgeleiteten Klassen von Dateisystemen sind insbesondere
- ein Remote-File-System, das einen Zugriff auf Dateien auf einen anderen Computer erlaubt,
- ein Mirror-File-System, das mehrere Verzeichnisse und darin vorgesehene Dateien auf unterschiedlichen physikalischen und/oder logischen Einheiten synchron hält (spiegelt) und/oder
- ein Delegate-File-System, das mehrere Dateisysteme und Dateifunktionsaufrufe in Abhängigkeit vom jeweiligen Pfad der entsprechenden Datei an diese File-Systeme verwaltet.

Durch das Vorsehen mehrerer Klassen von logischen Dateisystemen, auf die die Datei-System-Schnittstelle zum Zwecke der Kommunikation mit anderen logischen Dateisystemen jeweils aufsetzbar ist, kann das erfindungsgemäße Dateisystem einfach realisiert werden. Bei einer Realisierung in JAVA wird insbesondere die recht unabhängige Plattform für einzelne JAVA-Anwendungen beibehalten, obwohl ein erfindungsgemäßes JAVA Dateisystem auf unterschiedlichen Computersystemen und Netzwerksystemen installierbar ist.

Die Methoden und Funktionen der einzelnen Dateisystem-Klassen werden in die entsprechenden Funktions-Aufrufe der physikalischen Dateisysteme umgesetzt, zum Beispiel in einem bestimmten Computer bzw. Betriebssystem, in einem Bandlaufwerk oder in einem anderen bekannten logischen oder physikalischen Dateisystem wie zum Beispiel in einem FTP (File Transfer Protocol)-System, in einem Tar (Tape Archive)-System in einer U-nix- oder Linux-Systemumgebung oder in einem System mit Zip-Dateien (Dateien, die nach dem Algorithmus von Phil Katz komprimiert sind) umgesetzt.

Die Dateisystem-Schnittstelle (File System Interface) definiert nur den Namen der jeweiligen Methoden, mit welchen auf die einzelnen Dateisysteme zugegriffen wird, mit deren Eingangs-Parameter und den entsprechenden Rückgabewerten. Hierdurch wird das erfindungsgemäße Dateisystem plattform- und implementierungsunabhängig.

Ein entsprechendes Programm-System kann besonders vorteilhaft in Drucksystemen angewandt werden, bei denen diverse Geräte wie Anwendungscomputer, Host-Computer, Druckauftrags-Bearbeitungs-Computer (Druckserver), Träger variabler und statischer Druckdaten insbesondere innerhalb eines AFP-Druckdatennetzwerkes (AFP steht für Advanced Function Presentation Data Stream) und/oder Archivierungscomputer über ein Computernetzwerk verteilt ausgebildet sind.

Weiterhin ist es möglich, in einem beliebig erweiterbaren Computernetzwerk mit einer einzigen Anzeige- und Bedienungsoberfläche, verschiedene FileSystem-Implementierungen anzuzeigen und zu bedienen. Ein Dateisystem ist dabei insbesondere auch um die Fähigkeit des Remotezugriffs oder der Spiegelung erweiterbar. Verschiedene Dateisysteme sind beliebig kombinierbar und eine Auswahl kann nach Pfadnamen erfolgen. Über eine Socket-Schnittstelle können auch Nicht-Java-Programme auf alle Dateisysteme des Systems zugreifen.

Insbesondere kann zum Beispiel mit einem erfindungsgemäßen Dateisystem, in dem ein oder mehrere Delegate-File-Systeme implementiert sind, auf eine prinzipiell beliebige Zahl weiterer Dateisysteme zugegriffen werden.

Ist in einem derartigen Dateisystem ein Mirror-File-System implementiert, so sind diesem Dateisystem zumindest zwei weitere logische und/oder physikalische Dateisysteme unterzuordnen, auf welchen die einzelnen Verzeichnisse und/oder Dateien synchron gehalten werden.

Gemäß einer weiteren vorteilhaften Ausführungsform werden die Druckdaten mittels einer in dem Schnittstellen-Programmmodul vorgesehenen Fremdanbindungsschnittstelle (JAVA Socket) von einem ersten Druckserver, dessen Dateien nicht unmittelbar von dem Schnittstellen-Programmmodul verwaltet werden, zu einem zweiten Druckserver übertragen, dessen Dateien unmittelbar von dem Schnittstellen-Programmmodul verwaltet werden, und dann die Druckdaten an einem Druckserver weiterverarbeitet, dessen Dateien unmittelbar von dem Schnittstellen-Programmmodul verwaltet werden.

Weitere Aspekte und Vorteile der Erfindung werden durch die nachfolgende Beschreibung von Ausführungsformen der Erfindung mit einigen Figuren deutlich.

Es zeigen:
- Figur 1:: Ein Druckproduktionssystem,
- Figur 2:: Ein weiteres Druckproduktionssystem,
- Figur 3:: Ein drittes Druckproduktionssystem,
- Figur 4:: Eine Systemstruktur mit einem JAVA File System Interface,
- Figur 5:: Eine Systemstruktur für ein Remote File System Interface und
- Figur 6:: Eine grafische Benutzeroberfläche für ein JAVA File System Interface.

Das in Figur 1 gezeigte Druckproduktionssystem wurde bereits eingangs erläutert. Es kann jedoch auch in erfindungsgemäßer Weise betrieben werden, wenn die im Master-Druckserver 2 über das Netzwerk 7 eingehenden Druckdaten über das Netzwerk 8 blockweise derart an die Slave-Druckdatenserver 3, 4 bzw. 5 weiterleitet, dass verschiedene Daten eines Druckauftrages auf mindestens einem der angeschlossenen Sklave-Druckdatenserver 3, 4, 5 und/oder teilweise auf dem Master-Druckdatenserver 2 gespeichert werden. Dazu wäre im Master-Druckserver 2 ein steuerndes Master-Computerprogramm vorgesehen, mit dem zu jedem Datenblock des Druckauftrages spezifische Steuerdaten erfaßt bzw. gebildet würden, nämlich die Position des Blockes im ursprünglichen Druckdatenstrom bzw. in dem dazu entsprechenden Dokument des Druckdatenauftrages sowie der Speicherort innerhalb des Druckdaten-Server-Netzwerks 8.

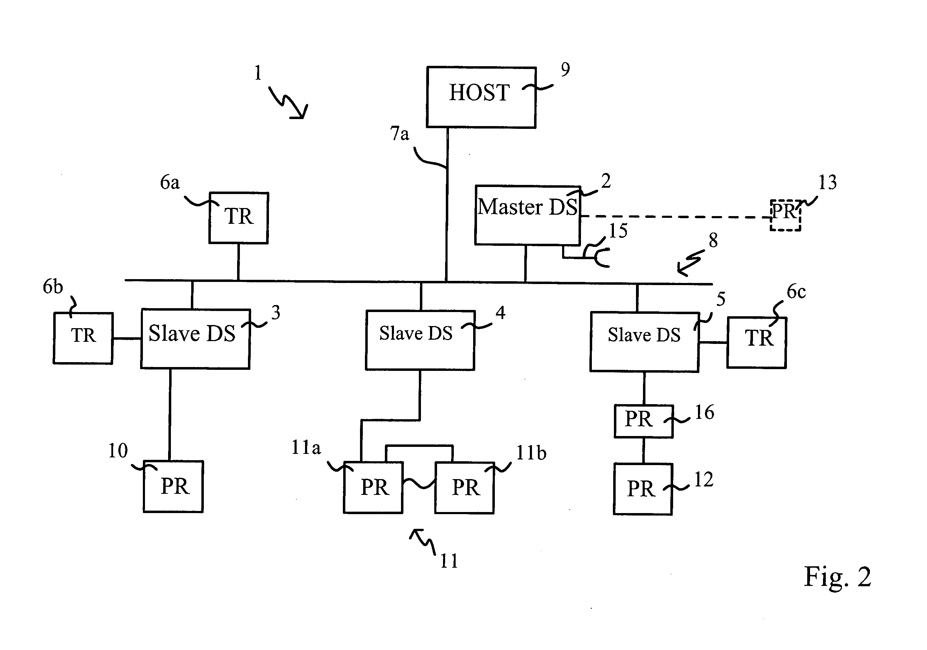

In Figur 2 ist ein Druckdatenproduktionssystem 1 gezeigt, bei dem Druckauftragsdaten wahlweise von einem Host-Computer 9 über eine Netzwerkverbindung 7a direkt in das Netzwerk 8 der Druck-Server 2, 3, 4, 5 eingespielt werden oder die Druckdaten von einem am Netzwerk 8 angeschlossenen Bandlesegerät 6a oder von einem der an den Druckservern 3 bzw. 5 angeschlossenen Bandlesegeräten in einen der Druckserver 2, 3, 4, 5 eingespielt werden. Dabei werden die Druckdaten blockweise als Datenpakete an einen der Druck-Server 2, 3, 4 oder 5 gesandt. Ein im empfangenden Druckserver ablaufendes Steuerprogramm meldet Einspielsteuerdaten an ein im Master-Druckserver 2 ablaufendes zentrales Steuerungsprogramm. Der Master-Druckserver 2 enthält ein gespiegeltes Speicherplattensystem, so daß er weiterhin betriebsbereit bleibt, selbst wenn eine der Speicherplatten ausfällt.

Das Steuerungsprogramm des Master-Druckservers 2 entscheidet dann, auf welchem der Druckserver 2, 3, 4 oder 5 der Druckauftrag abgearbeitet wird, beispielsweise anhand der Auslastung. Das Steuerprogramm prüft dazu, welcher Druckserver bzw. welches der daran angeschlossenen Geräte zur Weiterverarbeitung (Drucksysteme 10, 11, 12 bzw. Rasterprozessor 16) am besten verfügbar ist, z. B. welches die geringste Auslastung bzw. die kleinste Bearbeitungs-Warteschlange hat, welche Auflösung, Farbeigenschaften es hat etc.. Dazu meldet jeder Druckserver 3, 4, 5 regelmäßig Auslastungsdaten und/oder Ausstaltungsdaten an das zentrale Steuerungsprogramm. Weiterhin wird im Steuerungsprogramm überprüft, welche Priorität der Druckauftrag hat und dann wird entschieden, durch welchen Druckserver die Druckdaten weiterbearbeitet werden und ob die Druckdaten des Druckauftrages gesplittet werden, d.h. auf mehrere Druckserver aufgeteilt werden. Gegebenenfalls wird genau protokolliert, welche Datenblöcke an welchen Druckserver gesandt wurden. Im Master-Druckdatenserver 2 werden des weiteren Steuerungsdaten (job ticket Daten) abgelegt, die Informationen über die Position des jeweiligen Datenblockes innerhalb des Druckdatenstroms und/oder über den Speicherort (Druckdatenserver, Verzeichnis, Dateiname) innerhalb des Druckdatenserver-Netzwerks 8 enthalten. Weiterhin wird durch das Steuerungsprogramm festgelegt, welcher der Slave-Druckdatenserver 3, 4, 5 den Gesamtauftrag abarbeitet. Vorzugsweise wird diese Abarbeitung ebenfalls demjenigen Slave-Druckserver 3, 4, 5 zugewiesen, der mit dem an ihm angeschlossenen Drucksystem aktuell am wenigstens ausgelastet ist und/oder auf dem die meisten Datenblöcke des aktuellen Druckauftrages abgespeichert werden. Die Auslastung eines Systems kann beispielsweise durch die voraussichtliche Bearbeitungszeit für die in dem System zur Bearbeitung anstehenden Druckaufträge ermittelt werden indem die zu bearbeitende Datenmenge in das Verhältnis gesetzt werden zur Verarbeitungsgeschwindigkeit des Systems.

Zum Starten des Druckprozesses werden dem ausgewählten Druckserver die oben genannten Steuerungsinformationen übergeben. Die Übergabe der ersten job ticket Daten eines Druckauftrages kann bereits erfolgen, während noch spätere Daten des Druckauftrages in das Netzwerk 8 eingespielt werden. Damit läßt sich eine erste, sogenannte on-the-fly-Betriebsart herstellen, bei der die früher abgespeicherten Datenpakete bereits gelesen und der weiteren Verarbeitung zum Drucken zugeführt werden, während spätere Daten noch in das Netzwerk 8 eingelesen werden. In einer weiteren on-the-fly-Betriebsart können Daten eines Druckauftrages, die in einem ersten Druckserver gespeichert sind, von einem zweiten Druckserver gelesen werden und ohne Zwischenspeicherung direkt an ein am zweiten Druckserver angeschlossenes Drucksystem zum Ausdrucken gesandt werden.

Im Zeitraum zwischen dem Beginn des Datentransfers der Druckdaten in das Netzwerk 8 und dem Beginn des Auslesens der Daten aus dem Netzwerk kann sich die Auslastung der Druckserver 2, 3, 4, 5 bzw. der an ihnen angeschlossenen Drucksysteme 10, 11, 12 bzw. des angeschlossenen Druckdaten-Rasterprozessors 16 verändern. Beispielsweise kann durch Ausfall eines Drucksystems ein zuvor noch als wenig ausgelastet eingestuftes Drucksystem plötzlich als überlastet bewertet werden. In diesem Falle kann es je nach Priorität der an diesem Drucksystem anliegenden Druckaufträge sinnvoll sein, die Weiterbearbeitung des Druckauftrages auf ein anderes Druckserver/Drucksystem zu verlagern. Dabei ist es möglich, die Weiterbearbeitung an einer Stelle des Druckauftrages aufzusetzen, die gerade noch oder gerade nicht mehr im ersten Drucksystem gedruckt wurde. Der Druckauftrag wird dadurch nachträglich auf einfache Weise gesplittet, indem die Steuerinformationen (job ticket Daten) für die noch zu bearbeitenden Druckdaten an den anderen Druckserver übertragen werden. Anhand der von den Drucksystemen erhaltenen Druckfortschritts-Rückmeldungen stellt das zentrale Steuerungsprogramm fest, an welcher Stelle das Ausdrucken des Druckauftrags durch den Ausfall des ersten Drucksystems unterbrochen wurde und übermittelt an das zweite System die zur bereichs- bzw. seitengenauen Fortsetzung des Druckauftrages benötigten Steuerungsdaten.

Die Übergabe eines Druckauftrages von einem ersten Druckserver an einen zweiten Druckserver kann auch sinnvoll sein, wenn auf dem ersten Druckserver ein sehr großer und ein etwas kleinerer Druckauftrag zur Bearbeitung anstehen und wenn der kleinere Druckauftrag nachträglich hohe Priorität bekommt. Dazu werden die Steuerungsdaten des kleineren Druckauftrages vom ersten an den zweiten Druckserver übergeben und der Druckauftrag im zweiten Drucksystem abgearbeitet. Die Daten des Druckauftrages werden dabei anhand der Steuerungsinformationen blockweise in den zweiten Druckserver geladen.

Der Master-Druckserver 2 kann genauso wie die Slave-Druckserver 3, 4, 5 zum Ausdrucken genutzt werden, wenn an ihm ein Drucker 13 hängt, so dass diesbezüglich zwischen dem Master-Druckserver 2 und dem Slave-Druckservern 3, 4, 5 kein Unterschied besteht. Auch bezüglich der Zugriffsmöglichkeit auf das im Master-Druckserver 2 ablaufende zentrale Steuerungs- und Administrationsprogramm besteht kein Unterschied zwischen Master-Druckserver 2 und den Slave-Druckservern 3, 4, 5: von jedem der Druckserver kann auf das Steuerungs- und Administrationsprogramm zugegriffen werden und Änderungen an seinen Systemeinstellungen vorgenommen werden.

Während des Abarbeitens der Druckdaten werden im jeweiligen Druckserver die zu druckenden Daten gelesen und dann überprüft, ob und ggf. welches an dem Druckserver angeschlossenes Gerät zur Weiterverarbeitung der Druckdaten verfügbar ist. Schließlich werden die Druckdaten ggf. in einen von dem weiterverarbeitenden Gerät benötigten Datenstrom konvertiert (z.B. vom Datenformat AFP, Advanced Function Presentation, in das Datenformat IPDS, Intelligent Printer Data Stream) und schließlich Begleitdaten erfasst, z.B. die Seitenanzahl zum Zwecke statistischer oder abrechnungstechnischer Auswertung erfasst.

Zur Bearbeitung von Druckdaten ist in manchen Druckersprachen, z.B. in der bereits oben genannten AFP Sprache vorgesehen, Ressourcen-Daten zu verwenden. Sie umfassen beispielsweise Schriftarten, vordefinierte Formulare, Grafikdateien (Logos) usw. Um derartige Ressourcen-Daten im Drucksystem 1 aktuell zu halten, ist eine Schnittstelle 15 vorgesehen, über die derartige Ressourcen eingespielt werden können. An die Schnittstelle 15 ist dazu ein anderer Computer, ein Bandlaufwerk, ein Disketten- bzw. CD-ROM-Laufwerk oder vergleichbares anschließbar. Ressourcen können auch über den Host-Computer 9 zum Master-Druckserver 2 übertragen werden. Um die Ressourcen-Daten nicht vollständig an jeden der Slave-Druckserver 3, 4 und 5 senden zu müssen, was das Druckserver-Netzwerk 8 erheblich belasten würde, werden die Ressourcen-Daten zunächst nur im Master-Druckserver 2 gespeichert. Die Slave-Druckserver 3, 4, 5 fragen danach jeweils beim Abarbeiten eines Auftrags am Master-Druckserver 2 an, ob die dort hinterlegten Ressourcen-Daten jünger (neuer) sind als die jeweils noch im anfragenden Slave-Druckserver gespeicherten Daten. Dazu werden Versions-Daten und/oder Erstellungsdaten der jeweiligen Ressourcen-Dateien zwischen dem Slave-Druckserver und dem Master-Druckserver 2 verglichen. Falls im Master-Druckserver 2 Ressourcen-Daten, die im aktuellen Auftrag benötigt werden, jüngeren Datums gespeichert sind, so wird diese jüngere Ressourcen-Datei vom Master-Druckserver 2 an den anfragenden Slave-Druckserver übertragen, dort abgespeichert und zur Bearbeitung des aktuellen Druckauftrages verwendet. Falls im aktuell zu bearbeitenden Druckauftrag eine bestimmte Resourcen-Version zu verwenden ist (z.B. bei einem Wiederholungsdruck eines älteren Druckauftrages) und die Verwendung einer zugeordneten, älteren Ressource aus den Steuerungsbegleitinformationen dieses Druckauftrages deutlich wird (beispielsweise durch eine datums- oder Versionskennziffer), so wird dies durch Abfrage bzw. Analyse der Steuerungsinformationen erkannt und nach den entsprechenden älteren Ressourcen im System gesucht und ggf. diese ältere Version statt der jüngeren Version verwendet.

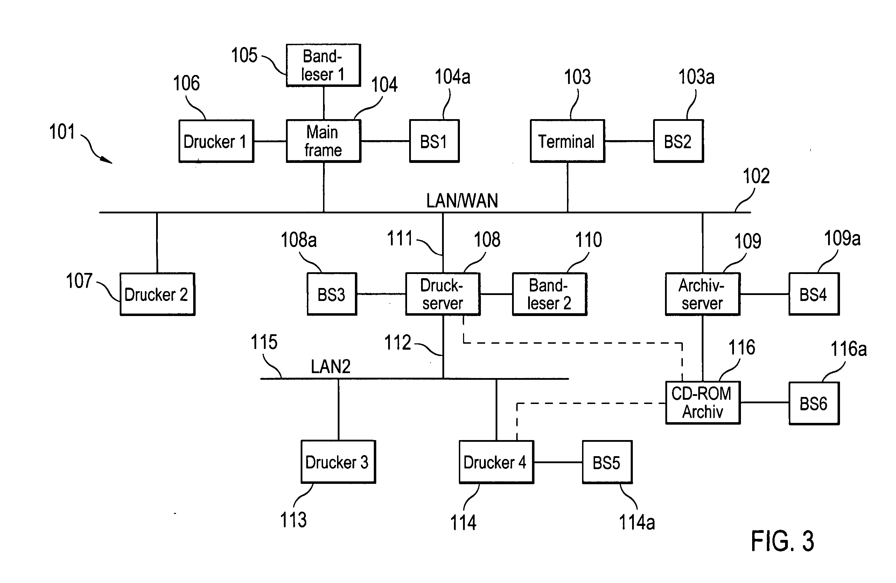

In Figur 3 ist ein Hochleistungsdrucksystem 101 gezeigt, bei welchem verschiedene System-Komponenten über ein Datennetzwerk 102, welches ein lokales Netz (Lokal Area Network, LAN) oder auch ein größeres Netzwerk (Wide Area Network, WAN, Internet) sein kann. An dem Netzwerk 102 hängt mindestens ein Client-Terminal 103, auf welchem Druckaufträge erzeugt werden können. Das Terminal 103 ist ein an sich bekannter Computer, z.B. ein Personal Computer PC mit einem Betriebssystem wie z.B. Microsoft Windows, Windows NT, Linux oder dergleichen, mit angeschlossenem Bildschirm 103a.

Die Druckaufträge können wahlweise auch auf einem Hauptcomputer (Main Frame) 104 erzeugt oder zumindest Daten von dem Main Frame 104 in den Druckauftrag eingefügt werden. Der Main Frame 104 des Rechenzentrums wird über eine geeignete Betriebssystem-Steuerung wie MVS, BS2000 oder VSE gesteuert. Am Main Frame 104 können Steuerungsfunktionen und Anzeigen über den daran angeschlossenen Bildschirm 104a erfolgen. An den Hauptcomputer 104 (Main Frame) ist außerdem ein Bandlesegerät 105 sowie ein erster Hochleistungsdrucker 106 direkt angeschlossen.

Am Datennetzwerk 102 sind außerdem ein zweiter Drucker 107, ein Druckserver 108 sowie ein Archivserver 109 angeschlossen. Der Druckserver 108 wiederum ist mit einem zweiten Bandlesegerät 110 sowie einem Bildschirm 111 verbunden. Zusätzlich zur Verbindung 111 zwischen dem Druckserver 108 und dem Haupt-Datennetzwerk 2 ist der Druckserver 108 über die Verbindung 112 mit einem zweiten, lokalen Netzwerk 115 verbunden, an dem weitere Drucker 113, 114 angeschlossen sind. Der Druckserver 108 sowie der Drucker 114 können optional mit einer Anlage zur Produktion von Archivspeichern (CD-ROM) 116 verbunden werden. Die Archivanlage 116 hängt jedoch hauptsächlich am Archivserver 109. Zusätzliche Bildschirme 109a, 116a und 114 a sind mit den jeweiligen Geräten 109, 116 und 114 verbunden.

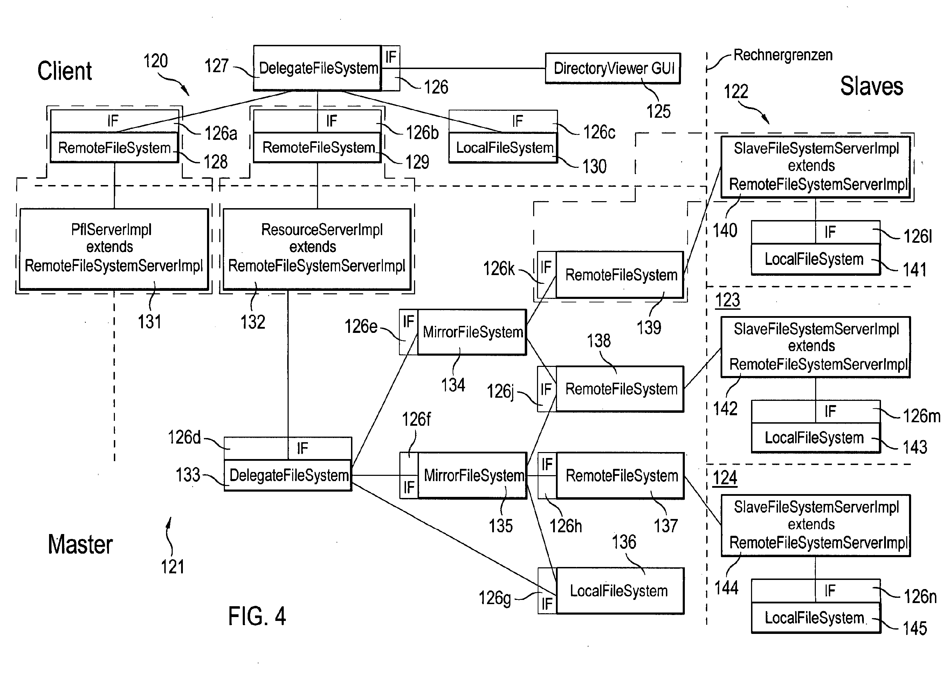

Zum Erstellen eines Druckauftrages im Datenformat AFP, beispielsweise am Client-Computer 103 oder am Druckserver 108, ist es erforderlich, auf entsprechende Ressource-Daten zuzugreifen. Diese Ressource-Daten können dabei unter Umständen an einem anderen Computer gespeichert sein, beispielsweise im Host-Computer 104, auf dem ein anderes Betriebssystem installiert ist als auf dem Client-Computer 103 bzw. dem Druckserver 108. Es ist deshalb erforderlich, ein geeignetes Hilfsmittel zur Verfügung zu haben, mit dem Betriebssystemunabhängig auf Dateien zugegriffen werden kann. Dazu dient das JAVA File System Interface 120, welches in Figur 4 gezeigt ist.

Bei der in Figur 4 gezeigten Systemstruktur ist ein Client 120 mit einem Master 121 verbunden, an dem wiederum verschiedene Subsysteme (Slaves) 122, 123 und 124 angekoppelt sind. Innerhalb des Client-Computers 120 ist ein Anzeigemodul für Dateiverzeichnisse (Directory View User Interface) 125 vorgesehen, an dem der Benutzer auf alte Dateien des gezeigten Systems, d.h., auf lokale Client-Dateien, auch Dateien im Master-System 121 und auf die Dateien der Slave 122, 123 und 124 zumindest in Form einer Verzeichnisanzeige zugreifen kann. Die grafische Benutzerschnittstelle 125 ist dazu an die in JAVA programmierte, universelle Schnittstelle 126 angeschlossen. Die JAVA-Schnittstelle 126 definiert ein abstraktes Dateisystem und ist keine Implementierung eines echten Dateisystems. Es ist daher auf einer solchen Implementierung nur "aufgesetzt", so dass die Impementierung auf die Schnittstelle zugreifen kann bzw. diese zur Steuerung der Kommunikation mit anderen Implementierungen lesen kann. Das Interface 126 ist beispielsweise auf dem Delegate File System 127 aufgesetzt, mit dem mehrere daran wiederum angeschlossene File Systeme 128, 129 und 130 verwaltet werden können.

Im JAVA-Interface 126 sind typische Dateiverwaltungs- und Bearbeitungsfunktionen definiert, beispielsweise das Kopieren, Umbenennen und Löschen von Dateien und Dateiverzeichnissen, die Abfrage des Inhaltes eines Dateiverzeichnisses, die Abfrage und Änderung von Datei- bzw. Verzeichniseigenschaften wie Größe, Erstellungs- und Änderungsdatum usw. sowie das Lesen und Schreiben von Dateien, die Erzeugung neuer Dateien und Verzeichnisse oder auch ein Ereignismechanismus zum Reagieren auf Änderungen. Weitere, typische Datei- bzw. Verzeichnisverwaltungseigenschaften können vorgesehen sein. Das abstrakte Dateisystem implementiert das JAVA-Interface 126 nur teilweise, ist aber Basis zur Ableitung der weiteren Implementierungen wie das Remote File System 128 und das Local File System 130.

Das JAVA File System 126 ist in identischer Form auch auf das Remote File System 128, auf das Remote File System 129 und auf das Local File System 130 aufgesetzt. Es bildet somit die plattform- und betriebssystemunabhängige Verbindungsstelle zwischen den verschiedenen Implementierungen 127, 128, 129 und 130. Mit der Implementierung Local File System 130 kann auf die im Client-Computer 120 lokal gespeicherten Dateien zugegriffen werden. Es implementiert alle im JAVA File System definierten Funktionen und Methoden zur Anwendung auf die physikalischen Dateien, die auf einem lokalen Speicher, z.B. auf einer Festplatte, gespeichert sind. Über das erste Remote File System 128 kann auf Dateien des Master-Computers 121 zugegriffen werden, die in einer sog. Print File Library enthalten sind. Das Remote File System 128 ist dazu mit dem Computerprogrammmodul "Remote File System Server Impl" 131 nach Art einer Sende- und Empfangsschnittstelle verbunden, so dass die im Interface 126a definierten Funktionen auch auf den Verzeichnissen bzw. Dateien der Server-Bibliothek (Print File Library) ausgeführt werden können. Eine entsprechende Verbindung besteht auch zwischen dem zweiten Remote File System 219 und der Resource Server Implementierung 132. Diese Implementierung ist über das JAVA File System 126d wiederum mit einem Delegate File System 133 verbunden, an dem wiederum mehrere Implementierungen, nämlich die beiden Mirror File System Implementierungen 134 und 135 über die entsprechenden JAVA File System Interfaces 126e und 126f verbunden sind. Zusätzlich kann das Delegate File System 133 über die JAVA File Systemstelle 126g auch Methoden und Funktionen an das Local File System 136 des Master-Computers 121 delegieren.

Das Mirror File System 134 ist wiederum über die beiden JAVA File System-Schnittstellen 126k und 126j mit Remote File Systemen 138, 139 verbunden. Das Remote File System 139 greift wiederum über die Remote File System Server Implementierung 140, die JAVA File Systemschnittstelle 126, auf das Local File System 141 zu, mit dem Handhabungs- und Verwaltungsoperationen der oben genannten Art im Slave-Computer 122 durchgeführt werden können. Dieselben Operationen können im Slave-Computer 123 über das Remote File System 138, die Remote File System Server Implementierung 142, das JAVA File System Interface 126m und das Local File System 143 erfolgen, wobei das Mirror File System 134 jeweils dafür sorgt, dass die in den Slaves 122 und 123 abgespeicherten Daten identisch gespiegelt sind.

Die vom Mirror File System 135 identisch gespiegelt gehaltenen Dateien werden im Local File System 136 des Servers, über das Remote File System 137, die Remote File System Server Implementierung 144, das JAVA File System Interface 126n und das Local File System 145 im Slave Computer 124 und /oder über das Remote File System 138 und die daran angeschlossenen System-Programmmodule im Slave Computer 123 gespiegelt gehalten.

Die gesamte Systemstruktur zeigt, dass über das JAVA File System Interface 126 eine Verkettung der verschiedenen File Systeme dergestalt möglich ist, dass eine hierarchische Verkettung der Systemaufrufe erfolgt. An oberster Stelle der Hierarchie steht dabei das Delegate File System 127 mit dem angeschlossenen JAVA File System Interface 126 von welchem aus baumstrukturartig die Dateioperationen an praktisch beliebig viele andere Computer (Server und/oder Slaves ) verteilt werden können. Die jeweils angeschlossenen Interfaces 126a, 126b usw. bis 126n sind dabei jeweils identisch zum JAVA File System Interface 126 ausgebildet. Dies hat neben der Plattformunabhängigkeit auch den Vorteil, das an jedem dieser Systeme ein Abgriff für eine grafische Benutzerfläche (GUI) möglich ist, wie im Client 120 anhand des Directory Viewer GUI 125 gezeigt.

Im Folgenden werden einige Klassen, die das JAVA File System Interface implementieren, auszugsweise mit einigen Java-Quellcodezeilen dargestellt.

### Klasse AbstractFileSystem:

Diese Klasse dient als Basis für weitere Ableitungen und enthält Grundfunktionalitäten wie das blockweise Kopieren von Daten vom InputStream zum OutputStream, Eventverteilung an registrierte Listener, rekursives Kopieren und Löschen von Verzeichnissen, rekursives Suchen in Verzeichnissen, Bearbeiten von Pfadnamen, usw. Eine Ableitung dieser Klasse muß alle abstrakten Methoden dieser Klasse (z.B. moveTree()) und alle hier nicht implementierten Methoden des Interfaces (z.B. isDirectory()) überschreiben.

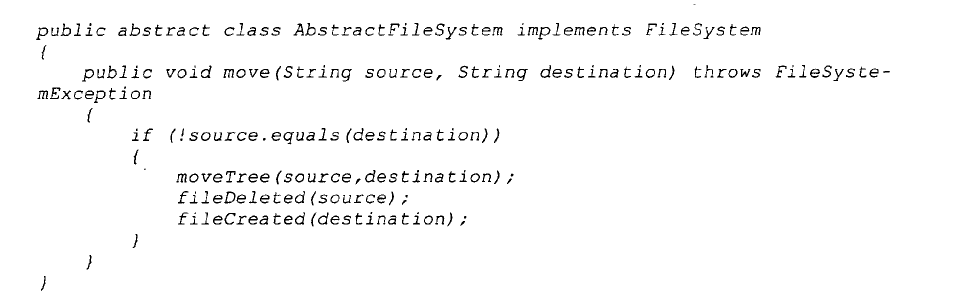

Die Methode move() ruft die Methode moveTree() (die von einer Ableitung noch implementiert werden muß) und benachrichtigt danach alle Listener, daß die Quelldatei gelöscht und Zieldatei erzeugt wurde.

### Klasse LocalFileSystem:

Diese Klasse ist eine Implementierung für den Zugriff auf lokale Dateien. Es bildet die FileSystem-Methoden auf Methoden der in Java standardmäßig verfügbaren Dateizugriffsklassen java.io.File, java.io.FileInputStream und java.io.FileOutput-Stream ab. Da es von AbstractFileSystem abgeleitet ist, verfügt es über dessen Fähigkeiten und ist damit wesentlich leistungsfähiger als die Standard-Dateizugriffsmethoden von Java. Weiterhin bietet es die Möglichkeit logische Pfadnamen zu echten Pfaden zu mappen.

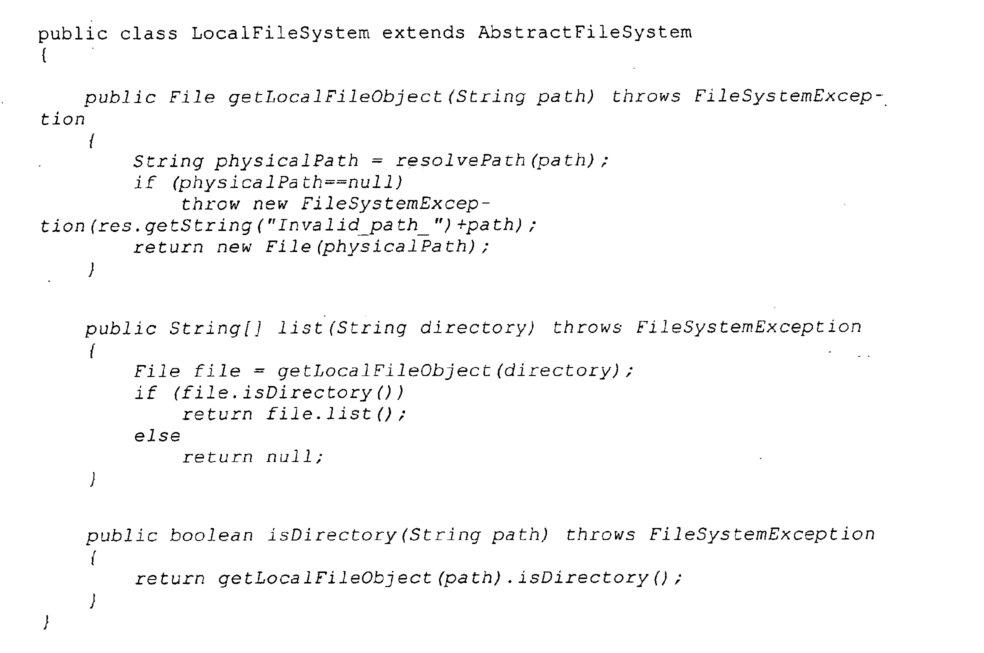

Die Methode getLocalFileObject () ist nicht Bestandteil des Interfaces, wird aber von anderen Methoden verwendet, um ein java.io.File Objekt zu erhalten. Sie löst zunächst ein evtl. vorhandenes Mapping auf und erzeugt dann das gewünschte Objekt. Die list-Methode dient dazu, den Inhalt eines Verzeichnisses auszulesen. Die Methode isDirectory stellt fest, ob der angegebene Pfad ein Verzeichnis ist.

Mit der nachfolgenden Methode setAttributes kann man Attribute einer Datei oder eines Verzeichnisses ändern. Bei lokalen Dateien läßt sich nur das Datum setzen.

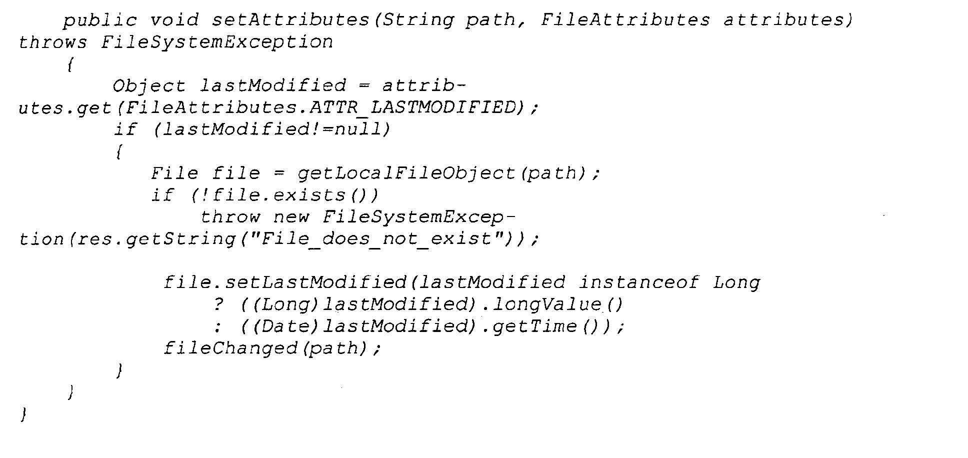

### RemoteFileSystem:

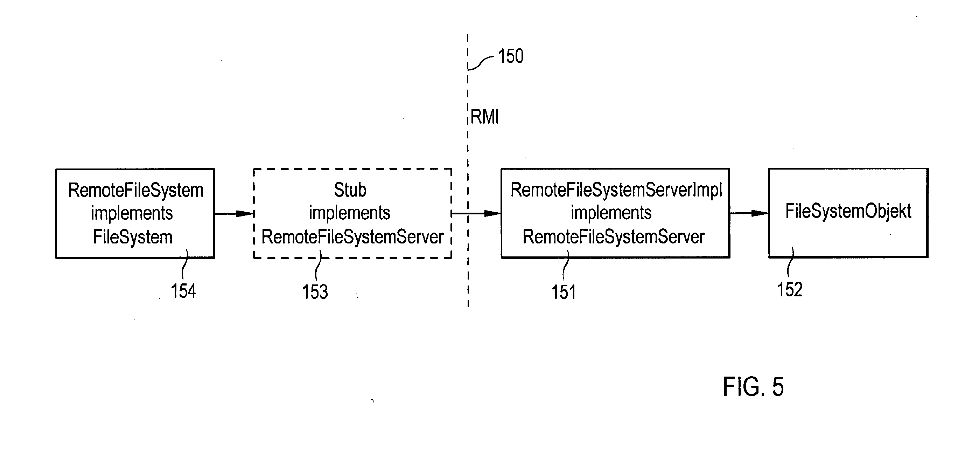

Diese Klasse ermöglicht den Zugriff auf ein FileSystem-Objekt 152, das in einem anderen Computer gespeichert ist. Wie in Figur 5 dargestellt, erfolgt die Kommunikation über die Rechnergrenze 150 hinweg über das Java-eigene Netzwerkprotokoll RMI. Auf der Gegenseite muß dazu ein Server existieren, der das Interface RemoteFileSystemServer 151 implementiert.

Die Stub-Komponente 153 kapselt das RMI-Protokoll und tritt normalerweise nicht in Erscheinung. Das RemoteFileSystem 154 verhält sich gegenüber einem File System, das das RemoteFileSystem 154 aufruft, so wie das FileSystem-Objekt 152 auf der Serverseite, indem es alle Aktionen dorthin delegiert. Für das RemoteFileSystem 154 wirkt wiederum die Stub-Komponente 153 so wie das serverseitige File-Objekt 152, d.h. es greift über das Interface RemoteFileSystemServer 151 auf das FileSystem-Objekt 152 zu.

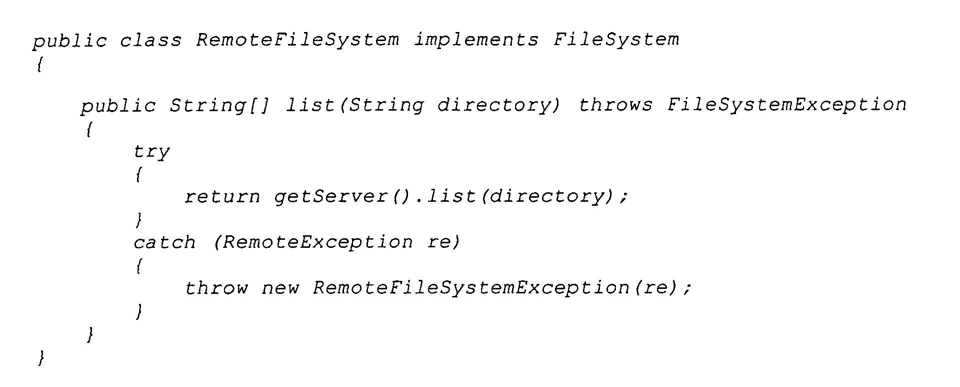

Die list-Methode delegiert führt die list-Methode des Servers aus, der wiederum die list-Methode seines FileSystem-Objektes aufruft. Da beim Remoteaufruf ein Fehler auftreten kann, muß die RemoteException abgefangen und in eine FileSystemException umgewandelt werden.

Die nun folgende Klasse RemoteFileSystemServerImpl oder eine deren Ableitungen dient als Bindeglied zwischen dem RemoteFileSystem und dem FileSystem-Objekt, das angesprochen werden soll. Es implementiert ein eigenes Remote-Interface RemoteFileSystemServer (Datei RemoteFileSystemServer.java), das die Methode definiert, die das RemoteFileSystem auf dem Server aufrufen kann.

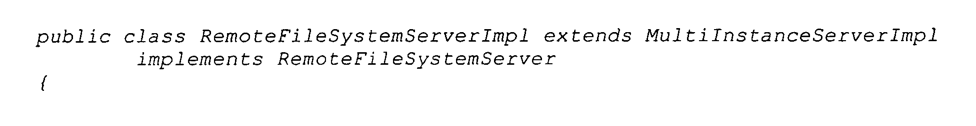

Der Server hat eine Variable vom Typ FileSystem, an die alle Aktionen des RemoteFileSystems delegiert werden.

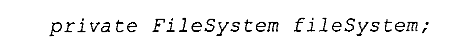

Die list-Methode des Servers ruft die list-Methode des FileSystem-Objektes auf und gibt das Ergebnis an das RemoteFileSystem auf der Clientseite zurück. Zuvor wird geprüft, ob der Benutzer des RemoteFileSystems Leserechte auf dem Server hat. Zur Fehlerprotokollierung werden mögliche Exceptions (Fehler) abgefangen, protokolliert und wieder geworfen.

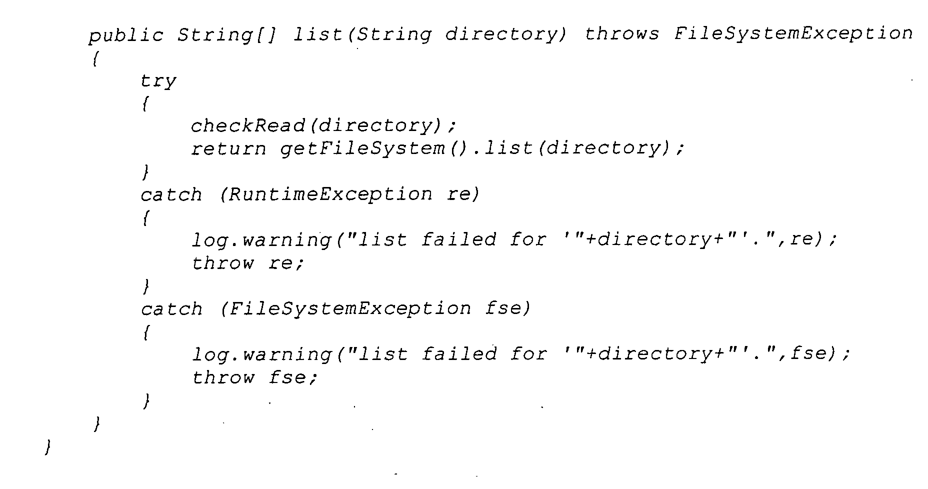

Weiterhin stellt RemoteFileSystemServerImpl eine Socketschnittstelle zur Verfügung, über die Nicht-Java-Programme auf dessen FileSystem zugreifen können.

### DelegateFileSystem:

Diese Klasse dient dazu, abhängig vom Pfadnamen, Aktionen and verschiedene FileSystem-Objekte zu delegieren. Damit lassen sich logische Pfade definieren, für die ganz bestimmte FileSystem-Objekte zuständig sind. Z.B gilt in der beschriebenen Systemumgebung der Pfad /$PFL/../.. als Pfad für eine Print File Library. Diese Print File Library wird über ein eigens dafür entwickeltes FileSystem-Objekt, das deren Eigenschaften, wie z.B. Versionierung von Dateien, implementiert, angesprochen.

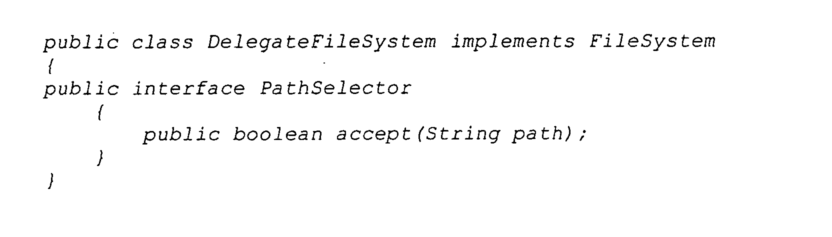

Über das Interface PathSelector wird entschieden, ob ein FileSystem für einen gegebenen Pfad zuständig ist.

Mit addFileSystem() wird dem DelegateFile-System ein FileSystem-Objekt mit zugehörigem PathSelector zugefügt:

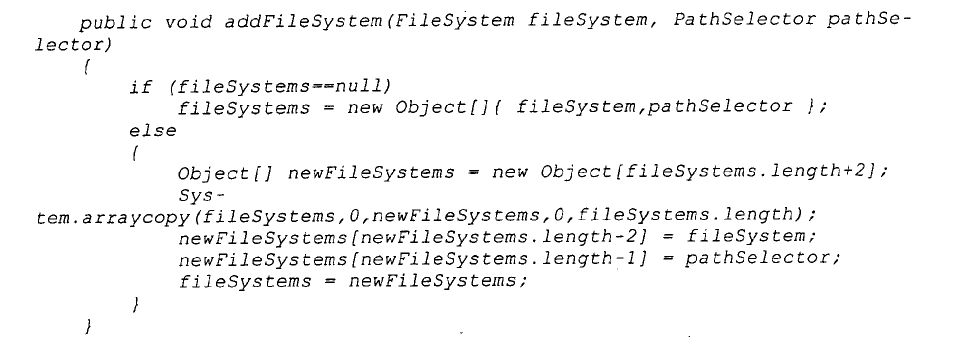

Die Methode findFileSystem findet zu einem angegebenen Pfad das zuständige FileSystem. Diese Methode wird über getFileSystem() von allen anderen Methoden aufgerufen, um eine Aktion weiter zu delegieren. Die Methode getFileSystem() ruft findFileSystem() auf und wirft eine Exception, wenn diese kein zuständiges FileSystem gefunden hat.

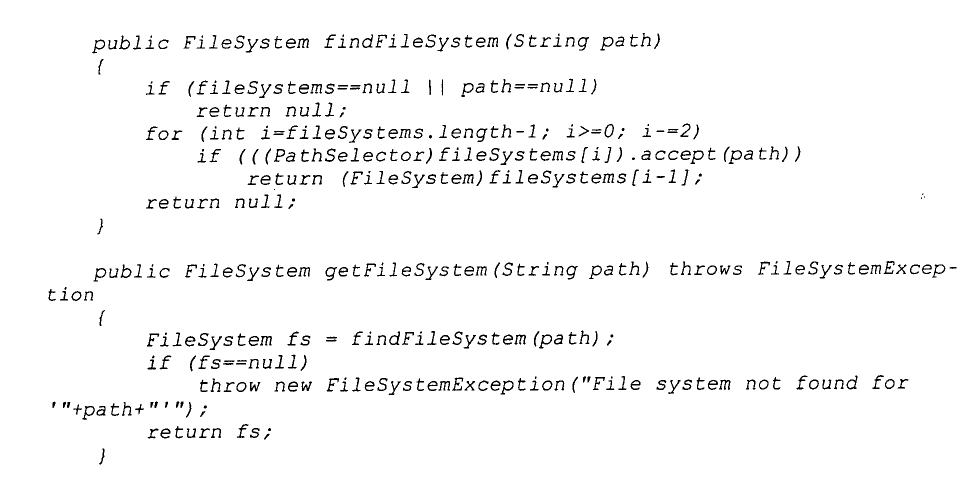

Die Methode isDirectory ruft getFileSystem (und damit indirekt findFileSystem(.)) auf um das für den angegebenen Pfad zuständige FileSystem zu ermitteln und ruft dessen isDirectory() Methode auf.

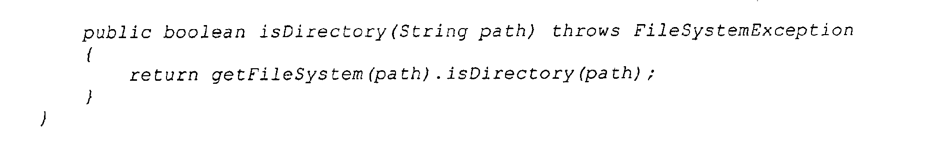

### MirrorFileSystem:

Diese Klasse dient dazu, mehrere FileSystem-Objekte (z.B. Verzeichnisse auf verschiedenen Rechnern) synchron zu halten.

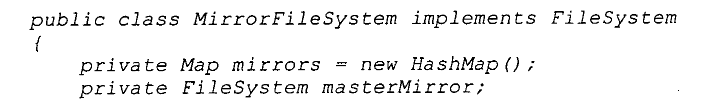

Mit den Methoden addMirror und removeMirror werden gespiegelte FileSystem-Objekte zugefügt bzw. entfernt. Das erste zugefügte FileSystem wird der Master, der als Referenz dient.

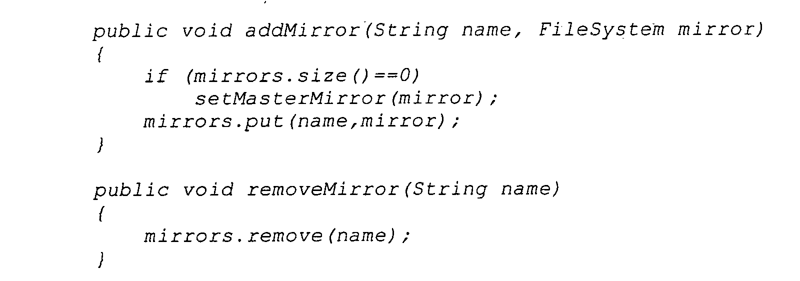

Die Methode move() ruft für alle gespiegelten FileSystem-Objekte deren move-Methode auf, um eine Datei zu verschieben. Tritt bei einer dieser Aktionen ein Fehler auf, werden alle vorhergehenden Aktionen rückgängig gemacht, d.h. die Datei wieder in ihren ursprünglichen Namen umbenannt.

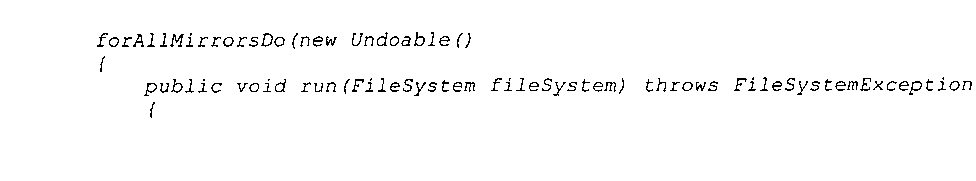

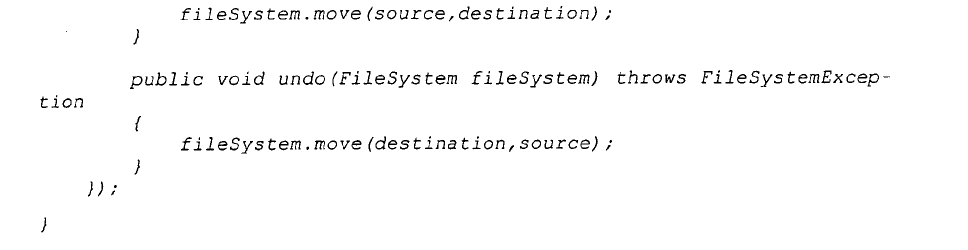

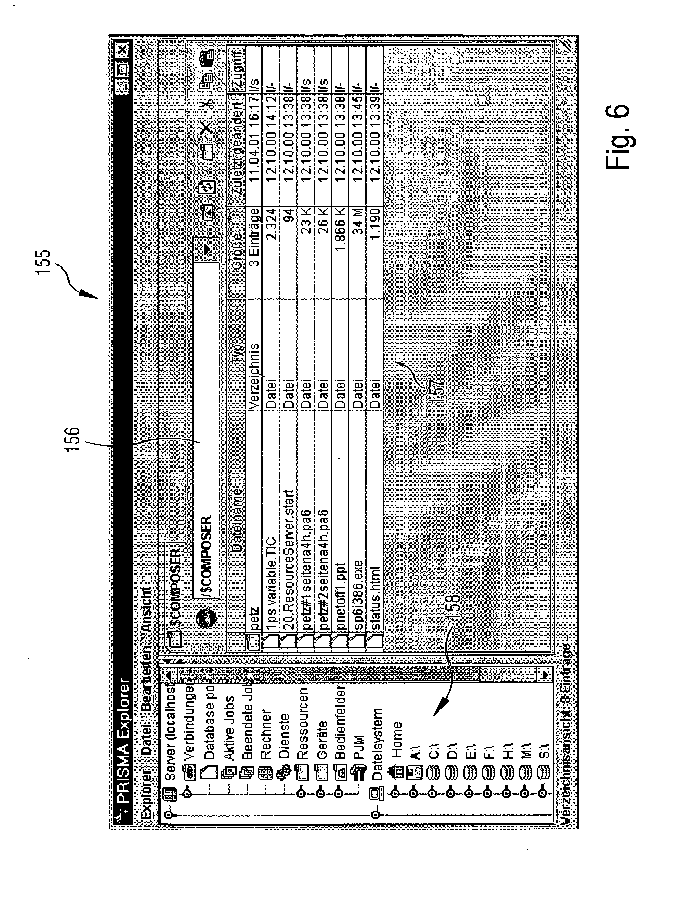

In Figur 6 ist ein mit einem Applet generierter Bildschirmausdruck gezeigt, auf dem eine Maske 155 gezeigt ist, mit der das Bearbeiten und Verwalten von Dateien anhand einer grafischen Benutzer-Schnittstelle ermöglicht wird. Die Maske 155 zeigt im Feld 156 ein Verzeichnis an und erlaubt damit und mit den im Verzeichnis enthaltenen Dateien, die im Bereich 157 angezeigt werden, Bearbeitungs- und Verwaltungsoperationen. Im Feld 158 sind alle verfügbaren Rechner bzw. Verzeichnisse baumstrukturartig dargestellt.

Die Erfindung ist in einem wie in Figur 1 beschriebenen Drucksystem vorteilhaft nutzbar, bei dem Druckdaten bzw. Drucksaufträge von einem Client-Computer abgesetzt und zu einem Master, der die Daten bzw. den Auftrag entgegennimmt, übertragen werden. Dabei können Ressource-Daten, insbesondere von Druckaufträgen im Datenformat AFP, die auf einem vernetzten Computer gespeichert sind oder auf mehreren Vernetzten Computern synchron gehalten werden sollen, von Client-Rechnern aus verwaltet werden. Dazu ist es insbesondere vorteilhaft, wenn folgende Konfigurationen eingehalten werden:
- Für den Dateizugriff vom Master auf die Slaves wird auf jedem Slave ein Server vom Typ SlaveFileSystemServerImpl installiert. Dieser ist eine Ableitung der RemoteFile-SystemServerImpl-Klasse und stellt sicher, daß er nicht illegalerweise von einem Client aus direkt benutzt wird
- Für den Zugriff von den Clients zum Master werden auf diesem mehrere Server vom Typ RemoteFileSystemServerImpl (z.B. ResourceServerImpl zur Ressourcenverwaltung) installiert. Diese greifen über eine Kombination von DelegateFileSystem-, MirrorFileSystem- und RemoteFileSystem-Objekten auf das lokale und die Dateisysteme der Slaves zu.

Auf dem Client gibt es Viewer zum Anzeigen und Bearbeiten eines FileSystem-Objektes. Dem in Figur 5 dargestellten Applet wird diesem Viewer ein DelegateFileSystem übergeben, der ein LocalFileSystem für lokalen Dateizugriff und mehrere Remote-FileSystem-Objekte für den Zugriff auf Serverdateien enthält.

Das oben beschriebene File System erlaubt insbesondere einen Datentransfer von Druckdaten zwischen verschiedenen Druckservern kontrolliert zu bewerkstelligen. Dazu kann im File System eine Fremdanbindungsschnittstelle (JAVA Socket) vorgesehen sein, über die Druckdaten von einem ersten Druckserver, dessen Dateien nicht unmittelbar von dem File System verwaltet werden, zu einem zweiten Druckserver übertragen wird, dessen Dateien unmittelbar von dem File System verwaltet werden. Die Druckdaten können dabei wie eingangs beschrieben zunächst auf mehrere Druckserver, d.h. auf einen Druckservercluster verteilt werden und dann an einen Druckserver des Clusters zur Aufarbeitung gesandt werden, dessen Dateien unmittelbar von dem File System verwaltet werden.

Obwohl in den Ausführungsbeispielen ein bestimmter Master-Computer gezeigt ist, kann diese Eigenschaft in einem Netzwerk von Druckservern im Prinzip jedem der angeschlossenen Computer zugewiesen werden. Insbesondere ist es möglich, in einem solchen System jedem der angeschlossenen Druckserver Zugriff auf das zentrale Steuerungssystem zu erlauben und insbesondere Änderungen der Systemeinstellungen über eine grafische Benutzerschnittstelle (Monitor mit Eingabemitteln wie Maus oder Tastatur oder auch Touch-Screen ) zu ermöglichen. Dabei bleibt der Grundgedanke einer zentralen Administration erhalten, auf die jedoch in einem Netzwerk dezentral zugegriffen werden kann. Obwohl für die Druckserver nur ein Netzwerk gezeigt wurde, ist es durchaus möglich, einzelne Druckserver untereinander oder z. B. mit dem HostComputer nochmals separat zu verbinden, z. B. durch eine dedizierte Netzwerkverbindung oder eine Direktverbindung.

Obwohl einige Aspekte der Erfindung anhand der Programmiersprache JAVA erläutert wurde, kann sie auch mit anderen objektorientierten Programmiersprachen wie z.B. C⁺⁺ ausgeführt werden. Mit der Erfindung werden nicht nur Verfahren, Geräte und Computerprogramme angegeben, sondern auch Computerprogramm-Produkte wie Speichermedien (Disketten, CD-ROMs usw.), die beim Laden und Ablaufen des Computerprogramms in einem Computer einen erfindungsgemäßen Verfahrensablauf bewirken.

Obwohl die Erfindung anhand eines in Java programmierten Dateisystems (File System) erläutert wurde, kann sie auch in beliebigen anderen Dateisystemen durchgeführt werden.

Die Erfindung ist insbesondere dazu geeignet, als Computerprogramm (Software) realisiert zu werden. Sie kann damit auch als Computerprogramm-Modul, als Datei auf einem Datenträger wie einer Diskette oder CD-Rom oder als Datei über ein Daten- bzw. Kommunikationsnetz verbreitet werden. Auch derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1: Druckproduktions-System
- 2: Master-Druckserver
- 3: Slave-Druckserver
- 4: Slave-Druckserver
- 5: Slave-Druckserver
- 6a, 6b, 6c: Bandlesegeräte (Tape Reading Device)
- 7: erstes Netzwerk
- 7a: Netzwerkverbindung
- 8: zweites Netzwerk
- 9: Host Computer
- 10: Druckgerät
- 11: Drucksystem
- 11a: Druckgerät
- 11b: Druckgerät
- 12: Druckgerät
- 13: Druckgerät

- 15: Schnittstelle
- 16: Rasterprozessor

- 101: Drucksystem
- 102: Haupt-Datennetzwerk
- 103: Client-Terminal
- 103a: zweiter Bildschirm
- 104: Hauptcomputer
- 104a: erster Bildschirm
- 105: erstes Bandlesegerät
- 106: erster Drucker
- 107: zweiter Drucker
- 108: Druck-Server
- 108a: dritter Bildschirm
- 109: Archiv-Server

- 110: zweites Bandlesegerät
- 111: erste Netzwerkverbindung
- 112: zweite Netzwerkverbindung
- 113: dritter Drucker
- 114: vierter Drucker
- 114a: fünfter Bildschirm
- 115: zweites Netzwerk
- 116: CD-ROM Archiv
- 116a: sechster Bildschirm

- 120: Client
- 121: Master
- 122: erster Slave
- 123: zweiter Slave
- 124: dritter Slave
- 125: Grafische Benutzerschnittstelle
- 126: JAVA File System-Interface
- 127: Delegate File System
- 128: erstes Remote File System
- 129: zweites Remote File System
- 130: Local File System im Client 20
- 131: Print File Library Implementierung
- 132: Resource Server Implementierung
- 133: Delegate File System
- 134: erstes Mirror File System
- 135: zweites Mirror File System
- 136: Local Filesystem im Master 21
- 137: drittes Remote File System
- 138: viertes Remote File System
- 139: fünftes Remote File System
- 140: erste Slave File System Server Implementierung
- 141: Local File System des Slaves 22
- 142: zweite Slave File System Server Implementierung
- 143: Local File System des Slaves 23
- 144: dritte Slave File System Server Implementierung
- 145: Local File System des Slaves 24

- 150: Rechnergrenze
- 151: RemoteFileSystem Server
- 152: FileSystem-Objekt
- 153: Stub-Komponente
- 154: RemoteFileSystem-Modul
- 155: Maske
- 156: Pfad-Feld
- 157: Dateifeld
- 158: Rechnerfeld

## Patentansprüche

1. Verfahren zum Verwalten und Bearbeiten von Dateistrukturen (Verzeichnisse und Dateien) in einem Computernetzwerk mittels Programm-Modulen, die aus einer objektorientierten Programmiersprache erzeugt sind, wobei
- eine Vielzahl von Dateiverwaltungs-Programm-Modulen jeweils einen Dateibereich verwalten,
- die Dateiverwaltungs-Programm-Module jeweils mit einem einheitlichen Schnittstellen-Programm-Modul (JAVA FileSystem Interface) zusammenwirken, das abstrakte Funktionen und/oder Methoden zur Verwaltung und/oder Bearbeitung von Dateistrukturen definiert und
- die Dateiverwaltungs-Programm-Module jeweils eine oder mehrere Implementierungen der abstrakten Methoden und/oder Funktionen enthalten.

2. Verfahren nach Anspruch 1, wobei die Dateiverwaltungs-Programm-Module derart hierarchisch verbunden werden, dass jeweils ein übergeordnetes Dateiverwaltungs-Programm-Modul an mindestens ein untergeordnetes Dateiverwaltungs-Programm-Modul Abfragebefehle und/oder Zugriffsbefehle zum zugeordneten Dateibereich erteilt.

3. Verfahren nach Anspruch 1 oder 2, wobei das einheitliche Schnittstellen-Programm-Modul jeweils derart auf ein untergeordnetes Dateiverwaltungs-Programm-Modul aufgesetzt ist, dass dessen Kommunikation mit einem übergeordneten Dateiverwaltungs-Programm-Modul über das Schnittstellen-Programm-Modul erfolgt.

4. Verfahren nach einem der vorhergehenden Ansprüche, wobei am hierarchisch obersten Dateiverwaltungs-Programm-Modul ebenfalls das Schnittstellen-Programm-Modul aufgesetzt ist und wobei darüber mit einem grafischen Benutzerschnittstellen-Programm-Modul kommuniziert wird.

5. Verfahren nach einem der vorhergehenden Ansprüche, wobei das einheitliche Schnittstellen-Programm-Modul eine Klasse im Sinne der objektorientierten Programmiersprache ist und wobei die Implementierungen jeweils als Ableitung (vererbte Klassen) aus dem einheitlichen Schnittstellen-Programm-Modul erzeugt werden.

6. Verfahren nach einem der vorhergehenden Ansprüche, wobei die Druckdaten mittels einer in dem Schnittstellen-Programmmodul vorgesehenen Fremdanbindungsschnittstelle (JAVA Socket) von einem ersten Druckserver, dessen Dateien nicht unmittelbar von dem Schnittstellen-Programmmodul verwaltet werden, zu einem zweiten Druckserver übertragen werden, dessen Dateien unmittelbar von dem Schnittstellen-Programmmodul verwaltet werden, und dann die Druckdaten an einem Druckserver weiterverarbeitet werden, dessen Dateien unmittelbar von dem Schnittstellen-Programmmodul verwaltet werden.

7. Druckdatenverarbeitungssystem umfassend ein Netzwerk von Druckservern mit einem Master-Druckserver, wobei ein Verfahren nach einem der Ansprüche 1 bis 6 durchgeführt wird.

8. Computerprogrammprodukt, das bei seiner Ausführung auf einem Druckdaten-Server einen Verfahrensablauf nach einem der Ansprüche 1 bis 6 bewirkt.

9. Computerprogrammprodukt nach Anspruch 8, erzeugt aus einer objektorientierten Programmiersprache zur betriebssystemunabhängigen Verwaltung und/oder Bearbeitung mindestens eines Dateisystems (file system), umfassend
- ein systemunabhängiges Schnittstellen-Programmmodul, das Funktionen und Methoden zur Handhabung und Verwaltung von Dateien beschreibt und
- eine abstrakte Dateisystem-Klasse (abstract file system class), die zumindest einen Teil der Funktionen und Methoden des systemunabhängigen Schnittstellen-Programmmoduls implementiert, welche wiederum von abgeleiteten Implementierungen verwendet werden können.

10. Computerprogrammprodukt nach Anspruch 9, **dadurch gekennzeichnet, dass** es aus der Programmiersprache JAVA erzeugt ist.

11. Computerprogrammprodukt nach Anspruch 9 oder 10, wobei zur Ergänzung der Funktionalität der abstrakten Dateisystem-Klasse mindestens eine weitere Dateisystem-Klasse vorgesehen ist.

12. Computerprogramm-Modul nach Anspruch 11, wobei als weitere Dateisystem-Klasse
- ein Remote-File-System, das einen Zugriff auf Dateien auf einen anderen Computer erlaubt,
- ein Mirror-File-System, das mehrere Verzeichnisse und darin vorgesehene Dateien synchron auf verschiedenen phylogischen oder physikalischen Einheiten verwaltet, und/oder
- ein Delegate-File-System, das mehrere Dateisysteme verwaltet und Dateifunktionsaufrufe in Abhängigkeit vom jeweiligen Pfad der entsprechenden Datei an diese Dateisysteme verwaltet,
vorgesehen wird.
